# EUROPÄISCHE PATENTSCHRIFT

(11) **EP 0 612 329 B1**
(45) Veröffentlichungstag und Bekanntmachung des Hinweises auf die Patenterteilung: **21.01.1998**
(21) Anmeldenummer: 92923021.7
(22) Anmeldetag: 04.11.1992
(51) Int. Cl.: C08G 18/28, C08G 18/48, C08G 18/66, C09D 7/12

(54) **VERDICKUNGSMITTEL AUF POLYURETHANBASIS**
POLYURETHANE-BASED THICKENING AGENTS
EPAISSISSANTS A BASE DE POLYURETHANNE

(30) Priorität: 13.11.1991 DE 4137247
(43) Veröffentlichungstag der Anmeldung: 31.08.1994
(73) Patentinhaber: Henkel Kommanditgesellschaft auf Aktien, 40191 Düsseldorf (DE)
(72) Erfinder: EICKEN, Ulrich, D-4052 Korschenbroich (DE); FISCHER, Herbert, D-4000 Düsseldorf 1 (DE); GRESS, Wolfgang, D-4600 Wuppertal-Elberfeld (DE); HÖFER, Rainer, D-4000 Düsseldorf 30 (DE); OBERKOBUSCH, Doris, D-4000 Düsseldorf 13 (DE); SCHIEFFERSTEIN, Ludwig, D-4030 Ratingen 1 (DE)
(86) Internationale Anmeldenummer: EP9202526
(87) Internationale Veröffentlichungsnummer: WO9310166

(56) Entgegenhaltungen:
- EP-A- 0 307 775
- US-A- 4 079 028

## Beschreibung

Die Erfindung betrifft Verdickungsmittel basierend auf einer wäßrigen Zubereitung nicht-ionischer in Wasser dispergierbarer oder löslicher Polyurethane, deren Herstellung und Verwendung.

Assoziative Verdicker auf Polyurethanbasis sind lineare oder verzweigte, nicht-ionische Polymere mit hydrophilen und hydrophoben Segmenten. In zunehmenden Maße substituieren oder ergänzen sie die traditionell als Verdicker in Farben und Lacken eingesetzten Celluloseether sowie die alkalilöslichen Polyacrylate. Gegenüber diesen weisen die Polyurethanverdicker folgende Vorteile auf:
- geringere Viskosität beim Einarbeiten
- geringere Spritzneigung beim Verstreichen
- besserer Farbverlauf
- höherer Glanz durch weniger Flokkulation
- geringere Wasserempfindlichkeit der Beschichtungen
- geringere Anfälligkeit gegen mikrobiellen Angriff
- geringe Eigenvikosität in der Konfektionierungsform und daraus resultierend gute Dosierbarkeit
- hohe Verdickungswirkung in den zu verdickenden Dispersionen
- möglichst geringer Abfall der Viskosität in den verdickten Dispersionen unter Scherung, näherungsweise Newton'sches Fließverhalten.

Derartige Polyurethanverdicker gehören zum Stand der Technik. Ihre Zusammensetzung, Herstellung und Verwendung wird beispielsweise in der US 4 155 892 beschrieben. Zur Herstellung der Polyurethane werden laut dieser Patentschrift folgende Komponenten miteinander zur Reaktion gebracht:
(a) mindestens ein wasserlösliches Polyetherpolyol
(b) mindestens ein wasserunlösliches organisches Polyisocyanat
(c) mindestens eine monofunktionelle hydrophobe organische Verbindung ausgewählt aus Verbindungen mit einem gegenüber Isocyanaten aktiven Wasserstoffatom und organischen Monoisocyanaten und
(d) mindestens einen polyfunktionellen Alkohol oder polyfunktionellen Etheralkohol.

Einen ähnlichen Inhalt hat die US-PS 4 079 028

EP-A-307 775 betrifft wasserdispergierbare, modifizierte Polyurethane, die Umsetzungsprodukte von
a) einem Polyisocyanat,
b) einem Polyetherpolyol,
c) einem modifizierenden Agens mit mindestens 2 aktiven Wasserstoffeinheiten und mindestens einer hydrophoben Gruppe, wobei das modifizierende Agens keine Gruppen enthält, die mit Polyisocyanat oder dem Polyetherpolyol reagieren können, und
d) einem "capping agent"
darstellen

Als repräsentative Beispiele von hydroxylhaltigen Verbindungen, die sich als "capping agents" eignen, sind Alkohole sowie Polyethylenoxidaddukte von Alkoholen genannt.

Aufgabe der Erfindung ist es, Verdickungsmittel auf Polyurethanbasis bereitzustellen, die gegenüber den Polyurethanverdickungsmitteln aus dem Stand der Technik nochmals eine deutliche Verbesserung der eingangs genannten Vorteile von Polyurethanverdickungsmitteln aufweisen. Insbesondere sollte bei vergleichsweise geringerer Eigenviskosität der Verdickungsmittel in ihrer Konfektionierungsform bei gleicher Menge eine erhöhte Viskosität des verdickten Produkts erreicht werden. Des weiteren soll eine weitere Annäherung an Newton'sches Fließverhalten erreicht werden. Außerdem sollen die Verdickungsmittel gewünschtenfalls ohne die Verwendung von Lösungsmitteln herstellbar sein.

Erfindungsgemäß wurde die Aufgabe gelöst durch Verdickungsmittel, basierend auf einer wäßrigen Zubereitung nicht-ionischer, in Wasser dispergierbarer oder löslicher Polyurethane, die herstellbar sind durch Umsetzung von
(a) polyfunktionellen Isocyanaten mit
(b) Polyetherpolyolen,
(c) monofunktionellen Alkoholen und
(d) gewünschtenfalls mehrfunktionellen Alkoholen,
dadurch gekennzeichnet, daß die monofunktionellen Alkohole (c) mindestens eine weitere polare Gruppe enthalten, wobei diese Gruppe gegenüber Isocyanaten nicht reaktiv ist und es sich um eine Ester-, Amid- und/oder Oxazolin-Gruppe handelt.

Wie bereits erwähnt, gehören Verdickungsmittel auf Polyurethanbasis zum Stand der Technik, wie beispielsweise die US 4 155 892. Der Unterschied zwischen dieser US-Schrift und der vorliegenden Anmeldung besteht im wesentlichen darin, daß statt der mindestens monofunktionellen hydrophoben organischen Verbindung mit einem gegenüber Isocyanaten reaktiven Wasserstoffatom in der vorliegenden Erfindung nunmehr monofunktionelle Alkohole eingesetzt werden, die mindestens eine weitere polare Gruppe enthalten. Eine Gruppe ist dann polar, wenn deren charakteristische Elektronenverteilung dem Molekül ein beträchtliches elektrisches Dipolmoment erteilt. Sie enthält vorzugsweise mindestens 2 Heteroatome. Während die Hydroxylgruppe der monofunktionellen Alkohole gegenüber Isocyanaten reaktiv ist, sollen dies die zusätzlichen polaren Gruppen nicht sein. Bis auf diesen Unterschied gelten im Wesentlichen alle anderen Ausführungen, die in der US 4 155 892 gemacht werden auch für die vorliegende Anmeldung, so daß diese US-Schrift mit zum Offenbarungsgehalt der vorliegenden Anmeldung gezählt werden muß.

Als Polyetherpolyole (b) sind beispielsweise die Polymerisationprodukte des Ethylenoxids, des Propylenoxids und/oder des Butylenoxids, deren Misch- oder Pfropfpolymerisationsprodukte sowie die durch Kondensation von mehrwertigen Alkoholen oder Mischung derselben und die durch Alkoxylierung von mehrwertigen Alkoholen, Amiden, Polyamiden und Aminoalkoholen gewonnenen Polyether geeignet. Bevorzugterweise sind diese Polyetherpolyole so stark hydrophil, daß sie wasserlöslich sind. Zur Herstellung der erfindungsgemäßen Polyurethane eignen sich bevorzugt solche Polyetherpolyole, die zumindestens überwiegend Polyalkylenglycole, insbesondere Polyethylenglycol und/oder Polypropylenglycol enthalten. Besonders gute Ergebnisse werden erzielt, wenn diese Polyalkylenglycole einen mittleren Gehalt an Alkoxyeinheiten im Bereich von 20 bis 400, insbesondere im Bereich von 160 bis 210 aufweisen. Besitzen die geeigneten Diole die allg. Formel 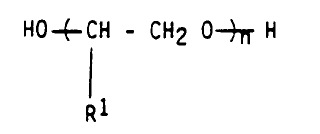 so kann n die Werte 20 bis 400 annehmen und R¹ kann H oder CH₃ sein.

Bevorzugt sind Diole mit R¹ = H und n = 130 bis 230, insbesondere n = 160 bis 210.

In einer bevorzugten Ausführungsform besteht das Polyurethanmolekül bis zu 90 Gew.-% aus den o. g. Dioleinheiten.

Als polyfunktionelle Isocyanate (a) sind alle mehrfunktionellen aromatischen, alicyclischen und aliphatischen Isocyanate geeignet. Vorzugweise enthalten die geeigneten mehrfunktionellen Isocyanate im Mittel 2 bis höchstens 4 NCO-Gruppen. Beispielsweise seien als geeignete Isocyanate genannt 1,5-Naphthylendiisocyanat, 4,4'-Diphenylmethandiisocyanat (MOI), hydriertes MDI (H₁₂MDI), Xylylendiisocyanat (XDI), Tetramethylxyloldiisocyanat (TMXDI), 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), gegebenenfalls in Mischung, 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethyl-cyclohexan, chlorierte und bromierte Diisocyanate, phosphorhaltige Diisocyanate, 4,4'-Diisocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäure-bis-isocyanatoethylester, ferner Polyisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylen-diisocyanat mit 1 mol Thiodiglykol oder Dihydroxydihexylsulfid. Weitere wichtige Diisocyanate sind Trimethylhexamethylendiisocyanat, 1,4-Diisocyanatobutan, 1,2-Diisocyanatododecan und Dimerfettsäure-diisocyanat. Interesse verdienen teilweise verkappte Polyisocyanate, welche die Bildung selbstvernetzender Polyurethane ermöglichen, z.B. dimeres Toluylendiisocyanat, oder mit beispielsweise Phenolen, tertiärem Butanol, Phthalimid, Caprolactam partiell umgesetzte Polyisocyanate.

In einer besonderen Ausführungsform enthält die Isocyanatkomponente anteilsweise Dimerfettsäureisocyanat. Als Dimerfettsäure bezeichnet man ein Gemisch von überwiegend C₃₆-Dicarbonsäuren, das durch thermische oder katalytische Dimerisierung ungesättigter C₁₈-Monocarbonsäuren, wie Ölsäure, Tallölfettsäure oder Linolsäure, hergestellt wird. Derartige Dimerfettsäuren sind dem Fachmann seit langem bekannt und kommerziell erhältlich. Die Dimerfettsäure läßt sich zu Dimerfettsäureisocyanaten umsetzen. Technisches Dimerfettsäurediisocyanat besitzt im Mittel mindestens zwei und weniger als drei Isocyanatgruppen pro Molekül Dimerfettsäure. Erfindungsgemäß bevorzugt ist es, daß die zur Herstellung der Polyurethane eingesetzten polyfunktionellen Isocyanate (a) zumindest überwiegend Dicyclohexylmethandiisocyanat und/oder Tetramethylxyloldiisocyanat (TMXDI) enthalten. Besonders gute Ergebnisse werden mit TMXDI erzielt, zumal sich dieses bei der Reaktionsführung einfacher handhaben läßt. Um im Polyurethanmolekül Verzweigungen einzufügen, kann es bevorzugt sein, auch trifunktionelle Isocyanate in untergeordneten Mengen einzusetzen.

Wie bereits erwähnt, weisen die monofunktionellen Alkohole (c) neben ihrer gegenüber Isocyanaten reaktiven OH-Gruppe eine weitere polare Gruppe auf, die sich gegenüber Isocyanaten inert verhält. Erfindungsgemäß ist bevorzugt, daß die zur Herstellung der Polyurethane eingesetzten monofunktionellen Alkohole (c), die die allgemeine Formel R²-OH besitzen, im Molekülteil R² bis zu 20 aliphatische C-Atome und als zusätzliche polare Gruppe eine Ester-, Amid- und/oder Oxazolin-Gruppe aufweisen. Besonders gute Ergebnisse werden erhalten, wenn (c) zumindestens überwiegend Ricinoloxazolin und/oder Ricinusfettsäuremethylester enthält. Von diesen beiden Verbindungen ist Ricinusfettsäuremethylester bevorzugt.

Das OH/NCO Verhältnis läßt sich im Prinzip über einen weiten Bereich variieren, bevorzugt ist jedoch ein stöchiometrisches Verhältnis oder ein Verhältnis mit einem leichten Überschuß an OH-Gruppen im Bereich von etwa 5 bis 10 % . Vorzugsweise liegt das Verhältnis bei 1 : 1. Des weiteren ist anzumerken, daß die OH-funktionellen Komponenten zumindest teilweise auch durch analoge Aminverbindungen ersetzt werden können.

In einer Ausführungsform der Erfindung sind die Polyurethanmoleküle linear, weisen also keine Verzweigung auf. Sie besitzen die allgemeine Formel:

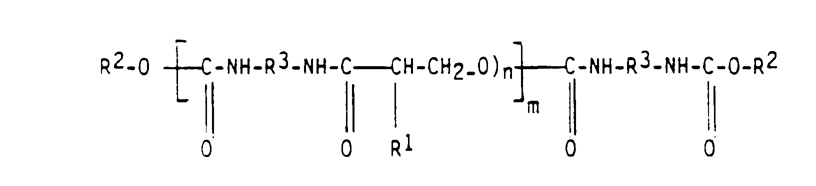

Dabei bedeuten R¹ = H oder CH₃, bevorzugt H
- R² =: Rest des mit Isocyanat umgesetzten monofunktionellen Alkohols (c)
- R³ =: Rest des mit gegenüber Isocyanaten reaktiven OH-Gruppen umgesetzten Diisocyanats
- n =: 20 bis 400 und
- m =: 1 bis 10

Vorzugsweise beträgt m 1 bis 5. Beste Ergebnisse werden für m = 1 oder 2 erhalten.

Als weitere Komponente zur Herstellung der Polyurethane können zweckmäßigerweise mehrfunktionelle Alkohole (d) eingesetzt werden. Hierzu sind Alkohole mit einer Funktionalität von 2 bis 4 besonders geeignet. Um Verzweigungen beim Aufbau des Polyurethanmoleküls herbeizuführen, sind zumindest trifunktionelle Ausgangssubstanzen einzusetzen. Derartig verzweigte Polyurethane als Basis für die erfindungsgemäßen Verdickungsmitteln sind als eine besondere Ausführungsform der Erfindung bevorzugt. Vorzugsweise enthalten dann die mehrfunktionellen Alkohole (d) zumindest überwiegend trifunktionelle Alkohole, wie beispielsweise Glycerin. Als trifunktioneller Alkohol ist im Sinne der Erfindung Trimethylolpropan (TMP) bevorzugt. Es können jedoch auch Verzweigungen beim Aufbau des Polyurethanmoleküls durch den Einsatz von Isocyanaten mit einer höheren Funktionalität als 2 erreicht werden. Hier sind Triisocyanate bevorzugt. Zur Optimierung der anwendungstechnischen Eigenschaften der Verdickungsmittel ist es sinnvoll, derartige Verzweigungsstellen innerhalb des Polyurethanmoleküls auf einen bestimmten Bereich zu beschränken. Hierbei ist es bevorzugt, daß der Gehalt der durch die mehrfunktionellen Alkohole eingebrachten OH-Gruppen - bezogen auf die Gesamtmenge an OH-Gruppen - 0 bis 50 % beträgt. Besonders gute Eigenschaften werden bei Verdickungsmitteln erzielt bei denen dieser Bereich auf 25 bis 35 beschränkt ist. Analoges gilt für den Fall, daß die Verzweigungen durch mehrfunktionelle Isocyanate herbeigeführt werden. Selbstverständlich können auch Molekülverzweigungen durch mehr als difunktionelle Alkohole und gleichzeitig durch mehr als difunktionelle Isocyanate herbeigeführt werden . Für diesen Fall sollte die Summe dieser Verbindungen bzw. deren funktionelle Gruppen nicht außerhalb der genannten Bereiche liegen.

Bevorzugt weisen die Polyurethane, die den erfindungsgemäßen Verdickungsmitteln zugrunde liegen, ein mittleres Molekulargewicht von 5 000 bis 50 000 auf. Für besondere Einsatzzwecke kann es bevorzugt sein, die Obergrenze des mittleren Molekulargewichts auf unter 10 000 zu beschränken.

Des weiteren betrifft die Erfindung ein Verfahren zur Herstellung der erfindungsgemäßen Verdickungsmittel. Dabei können die Reaktionsbestandteile (b), (c) und gewünschtenfalls (d) in beliebiger Reihenfolge mit (a) zur Reaktion gebracht werden. Bevorzugt ist es jedoch alle Komponenten gemeinsam, d. h. gleichzeitig miteinander zur Reaktion zu bringen. Die Reaktion kann in Lösungsmitteln durchgeführt werden, die gegenüber Isocyanaten inert sind, wie z. B. Toluol, Methylethylketon und/oder N-Methylpyrrolidon. Bevorzugt ist es jedoch, die Reaktion ohne Lösungsmittel in der Schmelze durchzuführen, insbesondere wenn TMXDI als Isocyanat verwendet wird. Die Reaktionstemperatur liegt bei etwa 60 bis 140°C, bevorzugt bei 70 bis 100°C. Zur Konfektionierung kann beispielsweise ein Gemisch von Propandiol und Wasser portionsweise der Schmelze zugesetzt werden. Nachdem die Dispersion oder Lösung homogen gerührt ist, kann nach Abkühlen die Abfüllung erfolgen. Vorzugsweise weisen die erfindungsgemäßen Verdickungsmittel einen Polyurethangehalt von 30 bis 45 Gew.-%, insbesondere von 40 bis 43 Gew.-% auf. Bei der Umsetzung können für Polyurethanreaktionen geeignete Katalysatoren, wie beispielsweise Dibutylzinndilaurat (DBTL) in üblichen katalytisch wirksamen Mengen eingesetzt werden.

Des weiteren betrifft die Erfindung die Verwendung der erfindungsgemäßen Verdickungsmittel. Die Verdickungsmittel werden vorzugsweise als solche eingesetzt. Ihr Einsatzbereich umfaßt im wesentlichen die Verdickung wäßriger Dispersionen. Besonders geeignet sind sie zum Verdicken von Dispersionsfarben.

### Beispiele

### Herstellung des Verdickungsmittels Nr. 1:

160 g Polyethylenglykol 8 000 und 14,7 g Edenor^{R} Me Ri (Ricinusfettsäuremethylester, Henkel) wurden vorgelegt, auf 120°C erhitzt und unter Vakuum entwässert. Anschließend wurde auf 70°C abgekühlt und 9,8 g Tetramethylxyloldiisocyanat und 0,15 g Dibutylzinndilaurat (DBTL) zugesetzt, bis sich im IR keine NCO-Gruppe mehr nachweisen ließ. Es wurde 6 h bei 70°C gerührt. Wird die Reaktion bei 120°C durchgeführt, verringert sich die Reaktionszeit auf etwa 2 h.

Dieses Herstellungsbeispiel ist exemplarisch für alle nachfolgenden Beispiele 2 bis 16. Werden mehrfunktionelle Alkohole (d) eingesetzt, so werden diese ebenfalls vorgelegt.

### Anwendungsbeispiel:

Dispersionsfarbe:

| Rezeptur: | |
|---|---|
| 51,0 g | 1,2 - Propandiol |
| 45,5 g | Wasser |
| 1,0 g | Hydropalat 1667 (Dispergiermittel, Henkel KGaA) |
| 126,0 g | Kronos RN 56 (Rutil, stabilisiert mit Al-, Si-Verbindungen, Kronos Titan GmbH) |
| 1,0 g | Dehydran 130 (Antischaummittel, Henkel KGaA) |
| 8,5 g | Texanol (Isobuttersäure-2,2,4-trimethyl-3-hydroxypentylester, Eastman Kodak) |
| 4,0 g | Dehygant LFM (Konservierungsmittel, Henkel KGaA) |
| 1,0 g | Ammoniak, konz. |
| 252,0 g | Primal AC 507 (Dispersion, Rohm & Haas) |

Aus dieser Rezeptur wird nach dem Stand der Technik eine Dispersionsfarbe hergestellt und mit 30 g einer 35 %-igen Lösung des Produktes aus Beispiel 1 in 1,2-Propandiol /H20 60 : 40 verdickt.

Die 35 Gew.-%-ige Lösung des Produktes aus Beispiel 1 in 1,2-Propandiol /H20 (60 : 40) hat eine Viskosität von n = 5,2 Pa · s (Brookfield, # 4, 20 UpM, 20°C)
Ein Handelsprodukt der Rohm & Haas zur Verdickung von Lacken und Farben (Primal^{R} RM-8) hat in gleich konzentrierter Lösung eine Viskosität von n = 25 Pa·s.

Es wurde auch die Viskosität mit und ohne Scherbelastung verglichen. Dazu wurde das erfindungsgemäße Produkt gemäß Beispiel 1 sowie die besten Handelsprodukte jeweils in gleicher Menge der Dispersionsfarbe zugesetzt (s. obige Beschreibung) und die Viskosität (n) in Abhängigkeit vom Geschwindigkeitsgefälle (D) in dem Rotationsviskosimeter Rotovisco RV 20, MS der Fa. Haake bestimmt. Die erhaltenen Kurven hatten bei D = 20 sec⁻¹ und 650 sec⁻¹ folgende η-Werte.

| Verdicker | η20 [Pa·s] | η650 [Pa·s] |
|---|---|---|
| - Produkt aus Beispiel 1 | ca. 2,5 | 0,73 |
| - Primal^{R} RM-8 (Rohm & Haas) | ca. 2,5 | 0,35 / 0,59 (2 verschiedene Chargen) |
| - Borchigel^{R} L 75 Verdickungsmittel für Dispersionsfarben der Fa.Borchers auf PU-Basis | ca. 4,0 | 0,50 |
| - Ser-Ad^{R} FX 1010 (Servo) auf PU-Basis | ca. 1,0 | 0,22 |

Der Vergleich zeigt, daß das Viskositätsverhalten ohne und mit Scherbelastung eta₂₀/eta₆₅₀ bei dem erfindungsgemäßen Verdicker am kleinsten und damit am ausgeglichensten ist.

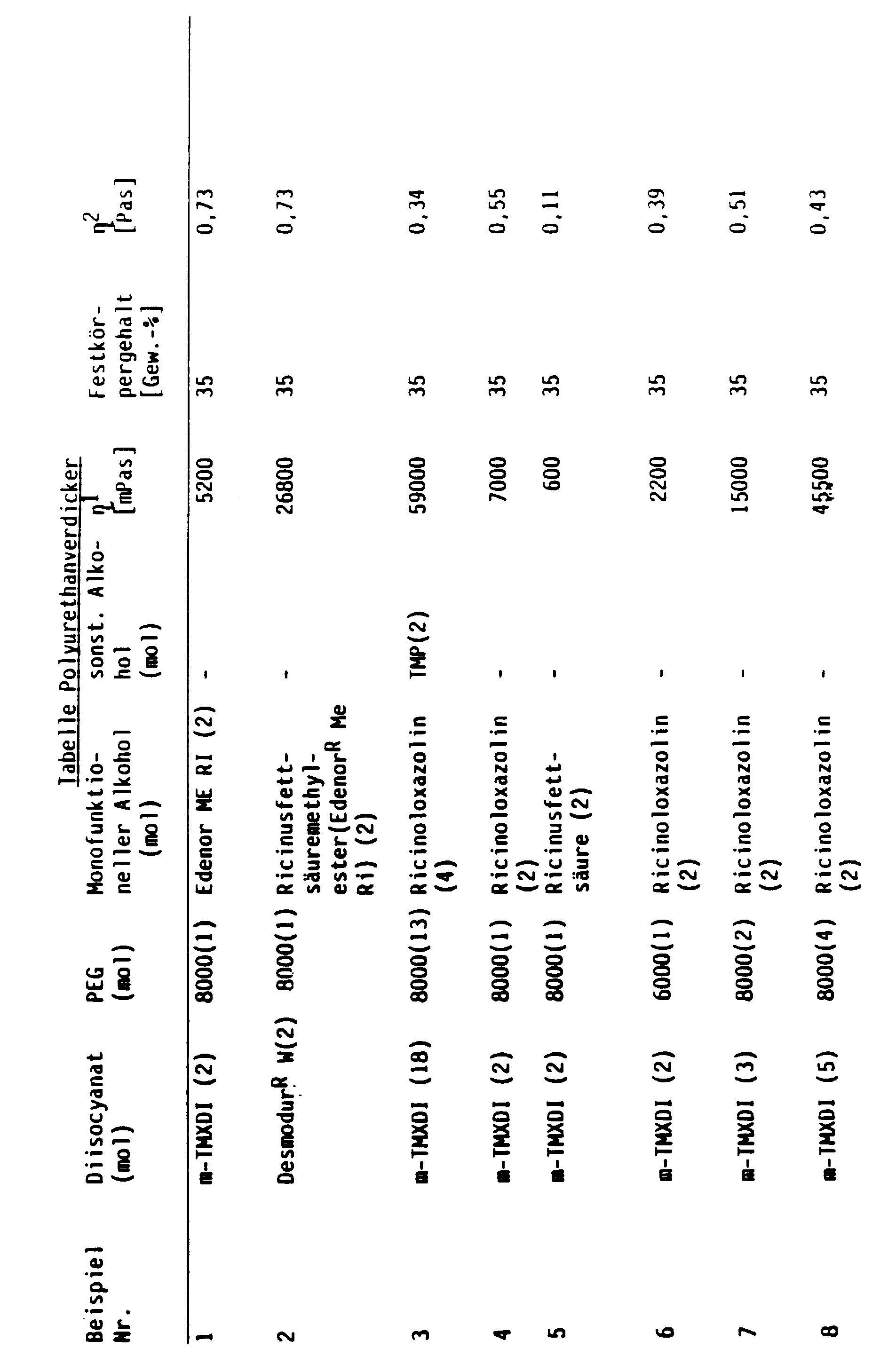

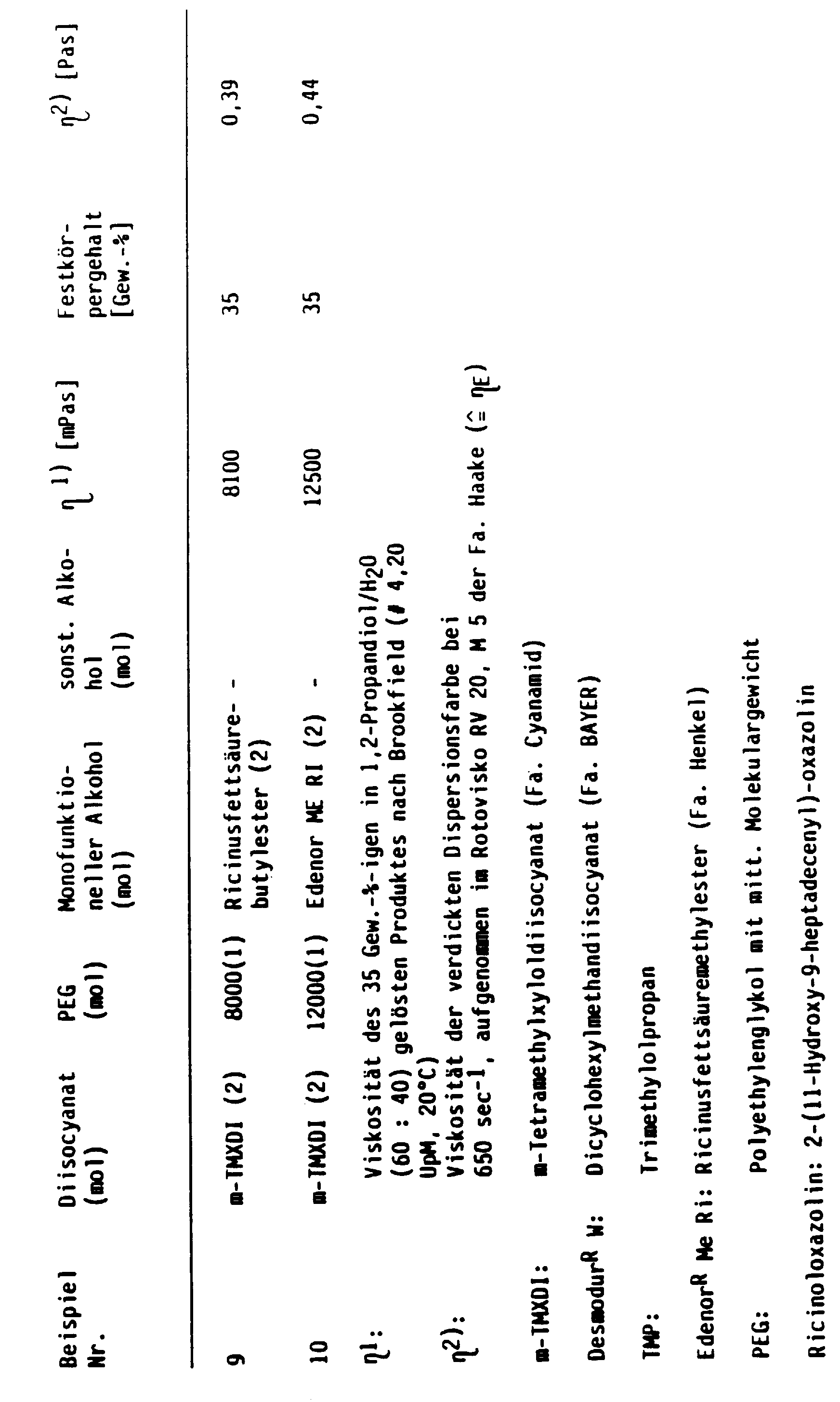

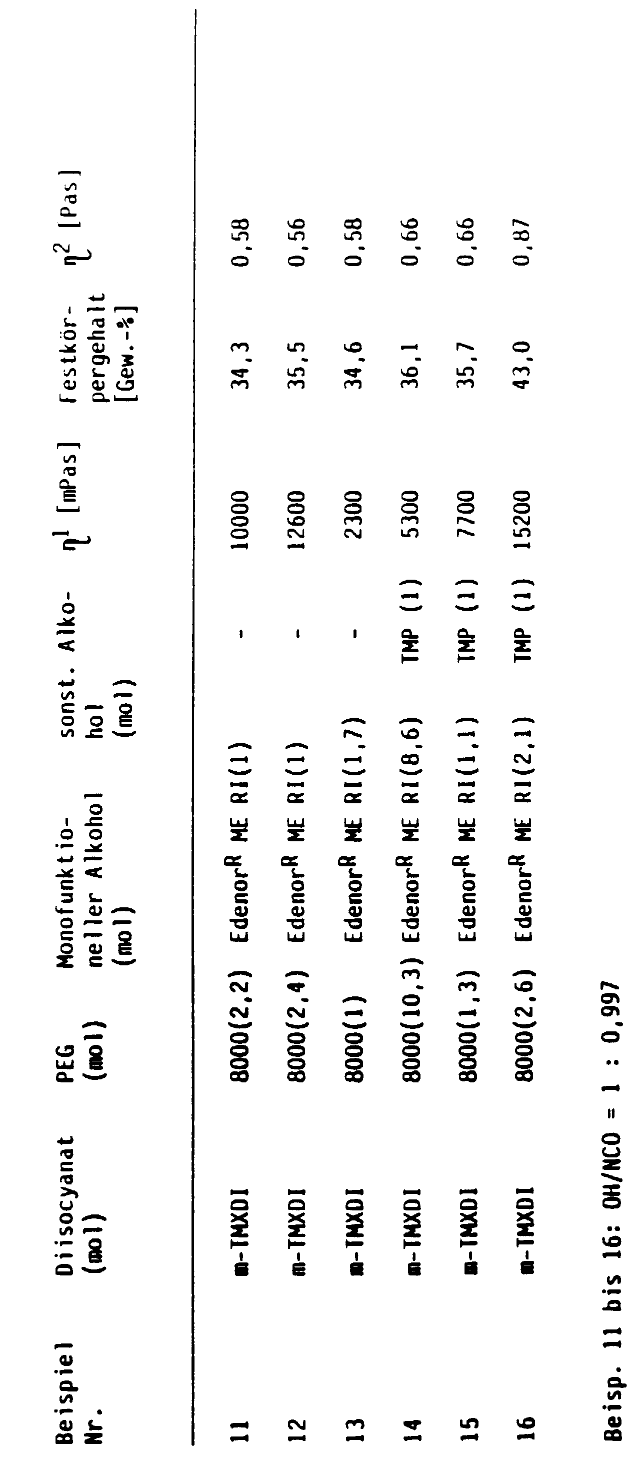

## Patentansprüche

1. Verdickungsmittel basierend auf einer wäßrigen Zubereitung nicht-ionischer in Wasser dispergierbarer oder löslicher Polyurethane, die herstellbar sind durch Umsetzung von
(a) polyfunktionellen Isocyanaten mit
(b) Polyetherpolyolen,
(c) monofunktionellen Alkoholen und
(d) gewünschtenfalls mehrfunktionellen Alkoholen,
dadurch gekennzeichnet, daß die monofunktionellen Alkohole (c) mindestens eine weitere polare, gegenüber Isocyanaten nicht reaktive Gruppe enthalten, und zwar eine Ester-, Amid- und/oder Oxazolin-Gruppe.

2. Verdickungsmittel nach Anspruch 1, dadurch gekennzeichnet, daß die zur Herstellung der Polyurethane eingesetzten Polyetherpolyole (b) zumindest überwiegend Polyalkylenglycole, insbesondere Polyethylenglycol und/oder Polypropylenglycol enthalten.

3. Verdickungsmittel nach mindestens einem der vorstehenden Ansprüche, dadurch gekennzeichnet, daß die Polyalkylenglycole einen mittleren Gehalt an Alkoxyeinheiten im Bereich von 20 bis 400, insbesondere von 160 bis 210 aufweisen.

4. Verdickungsmittel nach mindestens einem der vorstehenden Ansprüche, dadurch gekennzeichnet, daß die monofunktionellen Alkohole (c) mit der allgemeinen Formel R²-OH im Molekülteil R² bis zu 20 aliphatische C-Atome und als zusätzliche polare Gruppe eine Ester, Amid- und/oder Oxazolin-Gruppe aufweisen.

5. Verdickungsmittel nach einem der vorstehenden Ansprüche, dadurch gekennzeichnet, daß (c) zumindest überwiegend Ricinoloxazolin und/oder Ricinusfettsäuremethylester vorzugsweise Ricinusfettsäuremethylester enthält.

6. Verdickungsmittel nach mindestens einem der vorstehenden Ansprüche, dadurch gekennzeichnet, daß die zur Herstellung der Polyurethane eingesetzten polyfunktionellen Isocyanate (a) zumindest überwiegend Dicyclohexylmethandiisocyanat und/oder Tetramethylxyloldiisocyanat (TMXDI), vorzugsweise TMXDI enthalten.

7. Verdickungsmittel nach mindestens einem der vorstehenden Ansprüche, dadurch gekennzeichnet, daß die Polyurethane folgende allgemeine Formel 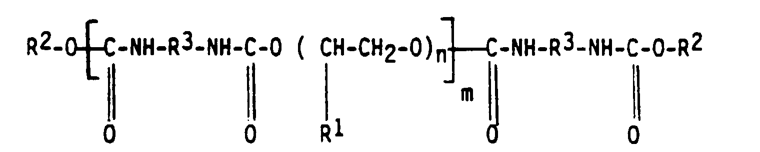
R¹ = H oder CH₃, bevorzugt H
R² = Rest des mit Isocyanat umgesetzten monofunktionellen Alkohols (c)
R³ = Rest des mit gegenüber Isocyanaten reaktiven OH-Gruppen umgesetzten Diisocyanats
n = 20 bis 400 und
m = 1 bis 10, bevorzugt 1 bis 5, insbesondere 1 oder 2
aufweisen.

8. Verdickungsmittel nach mindestens einem der vorstehenden Ansprüche, dadurch gekennzeichnet, daß die mehrfunktionellen Alkohole zumindest überwiegend trifunktionelle Alkohole, insbesondere Trimethylolpropan (TMP) enthalten.

9. Verdickungsmittel nach mindestens einem der vorstehenden Ansprüche, dadurch gekennzeichnet, daß das OH/NCO-Verhältnis 1 : 1 beträgt.

10. Verdickungsmittel nach mindestens einem der vorstehenden Ansprüche, dadurch gekennzeichnet, daß der Gehalt der durch die mehrfunktionellen Alkohole eingebrachten OH-Gruppen, bezogen auf die Gesamtmenge an OH-Gruppen, 0 bis 50 % beträgt.

11. Verdickungsmittel nach mindestens einem der vorstehenden Ansprüche, dadurch gekennzeichnet, daß der Gehalt an Polyurethanen 30 bis 45 Gew.-%, insbesondere 40 bis 43 Gew.-% beträgt.

12. Verfahren zur Herstellung von Verdickungsmitteln gemäß mindestens einem der vorstehenden Ansprüche, dadurch gekennzeichnet, daß (b), (c) und gewünschtenfalls (d) in beliebiger Reihenfolge - bevorzugt gleichzeitig - mit (a) zur Reaktion gebracht werden.

13. Verfahren nach Anspruch 12, dadurch gekennzeichnet, daß die Reaktion von (a), (b), (c) und gewünschtenfalls (d) ohne Lösungsmittel durchgeführt wird.

14. Verwendung der Verdickungsmittel gemäß mindestens einem der Ansprüche 1 bis 11 als solche, insbesondere als Verdickungsmittel für Dispersionsfarben.

## Claims

1. Thickeners based on an aqueous preparation of nonionic, water-dispersible or water-soluble polyurethanes obtainable by reaction of
(a) polyfunctional isocyanates with
(b) polyether polyols,
(c) monohydric alcohols and
(d) if desired, polyhydric alcohols,
characterized in that the monohydric alcohols (c) contain at least one other polar group, with the condition that this group is non-reactive towards isocyanates and that it is a ester-, amide- and/or oxazoline-group.

2. Thickeners as claimed in claim 1, characterized in that the polyether polyols (b) used for the production of the polyurethanes at least predominantly contain polyalkylene glycols, more particularly polyethylene glycol and/or polypropylene glycol.

3. Thickeners as claimed in at least one of the preceding claims, characterized in that the polyalkylene glycols have an average content of alkoxy units of 20 to 400 and, more particularly, 160 to 210.

4. Thickeners as claimed in at least one of the preceding claims, characterized in that the monohydric alcohols (c) with the general formula R²-OH contain up to 20 aliphatic carbon atoms in the moiety R² of the molecule and an ester, amide and/or oxazoline group as additional polar group(s).

5. Thickeners as claimed in at least one of the preceding claims, characterized in that (c) at least predominantly contains ricinoloxazoline and/or castor oil fatty acid methyl ester, preferably castor oil fatty acid methyl ester.

6. Thickeners as claimed in at least one of the preceding claims, characterized in that the polyfunctional isocyanates (a) used for the production of the polyurethanes at least predominantly contain dicyclohexylmethane diisocyanate and/or tetramethyl xylene diisocyanate (TMXDI) , preferably TMXDI.

7. Thickeners as claimed in at least one of the preceding claims, characterized in that the polyurethanes correspond to the following general formula: 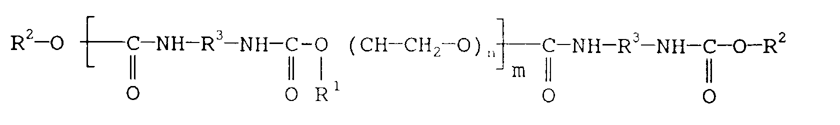 in which
R¹ is H or CH₃, preferably H,
R² is the residue of the monohydric alcohol (c) reacted with isocyanate
R³ is the residue of the diisocyanate reacted with isocyanate-reactive OH groups
n = 20 to 400 and
m = 1 to 10, preferably 1 to 5 and more preferably 1 or 2.

8. Thickeners as claimed in at least one of the preceding claims, characterized in that the polyhydric alcohols at least predominantly contain trihydric alcohols, more particularly trimethylol propane (TMP).

9. Thickeners as claimed in at least one of the preceding claims, characterized in that the OH:NCO ratio is 1:1.

10. Thickeners as claimed in at least one of the preceding claims, characterized in that the content of OH groups introduced by the polyhydric alcohols, based on the total quantity of OH groups, is 0 to 50%.

11. Thickeners as claimed in at least any of the preceding claims, characterized in that the content of polyurethanes is 30 to 45% by weight and more particularly 40 to 43% by weight.

12. A process for the production of the thickeners claimed in at least one of the preceding claims, characterized in that (b), (c) and if desired (d) are reacted with (a) in any order and preferably at the same time.

13. A process as claimed in claim 12, characterized in that the reaction of (a), (b), (c) and if desired (d) is carried out in the absence of solvents.

14. The use of the thickeners claimed in at least one of claims 1 to 11 as such, more particularly as thickeners for emulsion paints.

## Revendications

1. Agents épaississants basés sur une préparation aqueuse de polyuréthannes non ioniques, dispersibles ou solubles dans l'eau, qui peuvent être préparés par réaction de :
a) des isocyanates polyfonctionnels avec
b) des polyéthers de polyols
c) des alcools monofonctionnels et
d) si désiré des alcools plurifonctionnels
caractérisé en ce que
les alcools monofonctionnels c) renferment au moins un autre groupe polaire non réactif vis-à-vis des isocyanates et assurément un groupe ester, amide, et/ou oxazoline.

2. Agent épaississant selon la revendication 1,
caractérisé en ce que
les éthers de polyols b) mis en oeuvre pour la préparation des polyuréthannes renferment au moins d'une manière prépondérante, des polyalkylèneglycols, en particulier du polyéthylèneglycol et/ou du polypropylèneglycol.

3. Agent épaississant selon au moins une des revendications précédentes,
caractérisé en ce que
les polyalkylèneglycols possèdent une teneur moyenne en unités alkoxy dans la zone de 20 à 400, en particulier de 260 à 210.

4. Agent épaississant selon au moins une des revendications précédentes,
caractérisé en ce que
les alcools monofonctionnels c) ayant la formule générale R²-OH possèdent dans la partie de molécule R² jusqu'à 20 atomes de carbone aliphatiques et comme groupe polaire supplémentaire un groupe ester, amide et/ou oxazoline.

5. Agent épaississant selon au moins une des revendications précédentes,
caractérisé en ce que
c) renferme, au moins d'une manière prépondérante, de la ricinoloxazoline et/ou de l'ester méthylique des acides gras de ricin, de préférence l'ester méthylique des acides gras de ricin.

6. Agent épaississant selon au moins une des revendications précédentes,
caractérisé en ce que
les isocyanates a) polyfonctionnels mis en oeuvre pour la préparation des polyuréthannes, renferment, au moins d'une manière prépondérante, du dicyclohexylméthanediisocyanate et/ou du tétraméthylxylènediisocyanate (TMXDI), de préférence du TMXDI.

7. Agent épaississant selon au moins une des revendications précédentes,
caractérisé en ce que
les polyuréthannes possèdent la formule générale suivante : 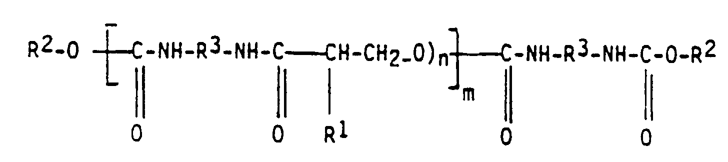
R¹ = H ou CH₃ de préférence H
R² = radical de l'alcool c) monofonctionnel mis à réagir avec l'isocyanate
R³ = radical du diisocyanate mis à réagir avec les groupes OH réactifs vis-à-vis des isocyanates,
n = 20 à 400 et
m = 1 à 10, de préférence de 1 à 5, en particulier 1 ou 2.

8. Agent épaississant selon au moins une des revendications précédentes,
caractérisé en ce que
les alcools plurifonctionnels renferment au moins d'une manière prépondérante des alcools trifonctionnels en particulier du triméthylolpropane (TMP).

9. Agent épaississant selon au moins une des revendications précédentes,
caractérisé en ce que
le rapport OH/NCO s'élève à 1:1.

10. Agent épaississant selon au moins une des revendications précédentes,
caractérisé en ce que
la teneur en groupes OH introduits par les alcools plurifonctionnels, rapporté à la quantité totale en groupe OH, s'élève de 0 à 50 %.

11. Agent épaississant selon au moins une des revendications précédentes,
caractérisé en ce que
la teneur en polyuréthannes s'élève de 30 à 45 % en poids, en particulier de 40 à 43 % en poids.

12. Procédé de préparation d'agents épaississants conformément à au moins une des revendications précédentes,
caractérisé en ce que
b), c) et si désiré d), dans n'importe quelle séquence, de préférence simultanément, sont amenés en réaction avec a).

13. Procédé selon la revendication 12,
caractérisé en ce que
la réaction de a), b), c) et si désiré d) est effectuée sans solvant.

14. Utilisation des agents épaississants conformément à au moins une des revendications 1 à 11, en tant que tels, en particulier comme agent épaississant pour les couleurs en dispersion.
